# EUROPEAN PATENT APPLICATION

(11) **EP 1 968 233 A1**
(43) Date of publication of application: **10.09.2008**
(21) Application number: 06805205.9
(22) Date of filing: 09.11.2006
(51) Int. Cl.: H04L 12/18

(54) **A PROCESSING METHOD AND DEVICE FOR THE MEDIA TRANSMISSION RIGHT**

(30) Priority: 01.12.2005 CN 200510125779
(71) Applicant: Huawei Technologies Co., Ltd., Shenzhen, Guangdong Province 518129 (CN)
(72) Inventor: LUO, Long, Shenzhen, Guangdong 518129 (CN)
(74) Representative: Hengelhaupt, Jürgen
(86) International application number: PCT/CN2006/003010
(87) International publication number: WO 2007/062574

(57) **Abstract**

A processing method and device for media transmission right is described. After a control point in a multi-party communication system receives a media transmission right application from a user, the control point performs judgment according to media transmission right types carried by the application and media transmission right attributes preset by the control point, and obtains an authorization result. According to the authorization result, the control point transmits a corresponding permit media transmission right response of a permitted media transmission right type to the user, and transmits a corresponding accept response of the permitted media transmission right type to other users in the group of the user, and the user transmits corresponding media stream data of the permitted media transmission right type to the other users in the group of the user; and the control point transmits a corresponding reject media transmission right response of a rejected media transmission right type to the user. The invention realizes the control of a number of media transmission rights for a request for the multi-type media transmission rights provided by multimedia service for multi-party communication.

## Description

### BACKGROUND OF THE INVENTION

### Field of the Technology

The present invention relates to a multi-party communication, and more particularly to a processing method and device for media transmission right in the multi-party communication.

### Background of the Invention

In the development of the network technology, the multi-party communication, such as a Push to Talk over Cellular (PoC) system, a conference system, a cluster system, has gradually become a widely applied service. In a multi-party communication system, a unique control point is needed to perform a unified management on the multi-party communication, so as to ensure a consistent and real-time control of all communication users in the multi-party communication. The management mentioned here specifically refers to a media transmission right (Floor) processing, that is, a communication user in a certain group needs to make a request such as a request to speak to the control point in the system, and can transmit the media stream data to other communication users in the group only if the control point judges and permits the above request.

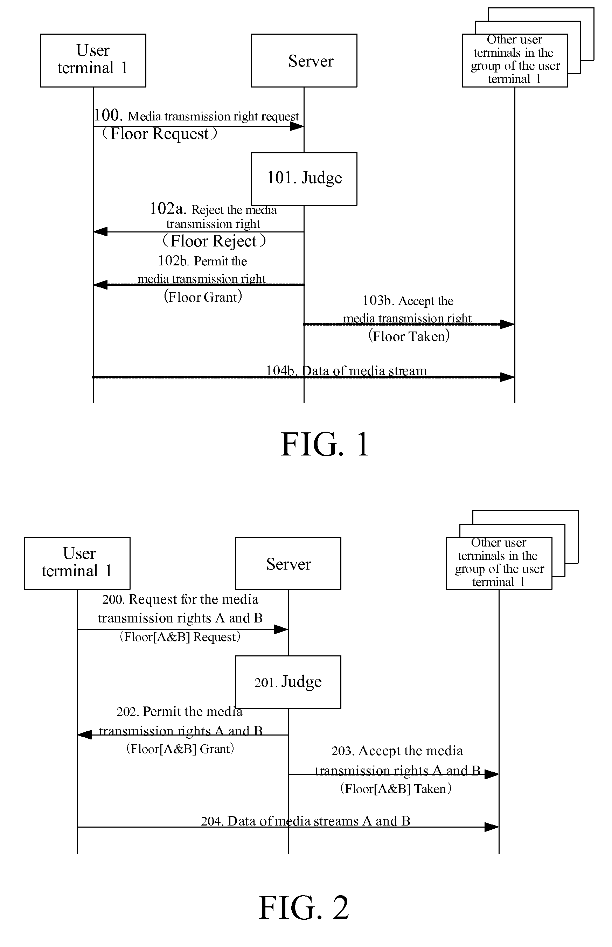

By now, the media transmission right processing of the single media data based on voice has been realized in the multi-party communication system such as the PoC system or cluster system. FIG. 1 is a flow chart of the media transmission right processing in the prior art. Only the processing on the media transmission right of voice type exists in the PoC system or cluster system. If a user in a certain group requests to speak, the existing specific processing includes the following steps.

In Step 100, the user to speak sends out a media transmission right request (Floor Request) message to a control point server through a user terminal 1 (UE1).

Since the media transmission right in the multi-party communication is of the single voice type, the server starts a judging process after receiving the Floor Request message.

In Step 101, the server judges whether a grant of the media transmission right to the UE1 is agreed or not according to a preset strategy, and if agreed, the procedure proceeds to Step 102b; otherwise, the procedure proceeds to Step 102a.

The strategy may be a strategy about whether the media transmission right is currently occupied or not, or whether the UE1 has the right to apply for the media transmission right or not. For example, if the current media transmission right is occupied by other users, the grant is not agreed; otherwise, the grant is agreed.

In Step 102a, the server transmits a media transmission right reject (Floor Reject) message to the UE1 to reject the media transmission right application of the UE1, and then this procedure ends.

In Steps 102b- 103b, the server transmits a permit media transmission right (Floor Grant) message to the UE1 to permit the media transmission right application of the UE1, and transmits an accept media transmission right (Floor Taken) message to other UEs in the group of the UE1 to notify the other UEs that the current media transmission right has been granted to the UE1.

In Step 104b, the UE1 transmits the media stream (Media Burst) data to the other UEs in the group.

In the existing processing method for the media transmission right, the server only controls one type of media transmission right according to the preset strategy.

With the development of the broadband network, the mobile communication is no longer limited to the conventional voice communication. The multimedia service in combination with multiple media types such as the audio, video, picture, and text has been gradually developed to meet multiple demands of users through the combination with the presence service, short message, WEB browsing, positioning information, PUSH service, file sharing, and other data services. Driven by multiple applications, the 3rd Generation Partner Project (3GPP) standard organization promotes an IP-based multimedia subsystem (IMS) architecture with the purpose of using a standardized open structure in the communication network to realize a variety of multimedia applications and provide the users with more choices to meet various demands thereof.

Although the multimedia service has provided a request for various types of media transmission rights for the multi-party communication, the server only controls one type of media transmission right and cannot realize the control of multiple media transmission rights in the existing processing method for the media transmission right.

### SUMMARY OF THE INVENTION

Accordingly, the present invention is mainly directed to a processing method for media transmission right capable of controlling multiple media transmission rights.

The present invention is further directed to a processing device for media transmission right capable of controlling multiple media transmission rights.

In order to achieve the above objectives, the technical schemes of the present invention are specifically implemented as follows.

The present invention provides a processing method for media transmission right, which presets corresponding relations between media transmission right types and media transmission right attributes in a control point for performing a unified management on a multi-party communication. The method further includes the following steps.

In Step A, after receiving a media transmission right application from a user, the control point performs judgment according to the corresponding media transmission right attributes of the media transmission right types carried in the media transmission right application, and achieves an authorization result.

In Step B, the control point transmits a media transmission right response and media stream data respectively to the user applying for the media transmission right and other users in the group of the user according to the authorization result.

The transmitting the media transmission right response and the media stream data in the Step B includes the following steps.

The control point transmits a corresponding permit media transmission right response of a permitted media transmission right type in the media transmission right types to the user, and transmits a corresponding accept response of the permitted media transmission right type to the other users in the group of the user. The user transmits the corresponding media stream data of the permitted media transmission right type to the other users in the group of the user. The control point transmits a corresponding reject media transmission right response of a rejected media transmission right type in the media transmission right types to the user.

The media transmission right application includes the following steps.

The user applies for different types of media transmission rights to the control point through the same media transmission right application carrying multi-type media transmission rights.

Or, the user applies for different types of media transmission rights in turn to the control point through different media transmission right applications each carrying one type of or multi-type media transmission right(s).

The media transmission right response includes the following steps.

The control point simultaneously judges the different types of media transmission rights, and gives the media transmission right response in the same permit or reject media transmission right response.

Or, the control point simultaneously judges the different types of media transmission rights and respectively gives different media transmission right responses in turn.

Or, the control point respectively judges the different types of media transmission rights and respectively gives different media transmission right responses.

The media transmission right attributes include respective basic attributes of the different types of media transmission rights, influence attributes for identifying whether the different types of media transmission rights influence each other or not, and authorization order attributes for identifying whether authorization orders exist between the different types of media transmission rights or not and identifying a precedence order relation of the authorizations.

The basic attributes include whether the type of media transmission right itself has currently been authorized or not, and whether the type of media transmission right itself allows the current user to apply or not.

The judging and achieving the judgment result includes the following steps.

If the influence attributes are non-influencing between the media transmission right types carried in the media transmission right application and the authorization order attributes thereof are disordered, the media transmission right type with the basic attribute of being unauthorized and allowing the current user to apply in the media transmission right types is permitted to be authorized, and the authorization is performed disorderly or according to a preset authorization order condition.

If the influence attributes are non-influencing between the media transmission right types carried in the media transmission right application and the authorization order attributes thereof are ordered, the media transmission right type with the basic attribute of being unauthorized and allowing the current user to apply in the media transmission right types is permitted to be authorized, and the authorization is performed according to the authorization precedence order in the authorization order attributes.

If the influence attributes are mutually-influencing between the media transmission right types carried in the media transmission right application and the authorization order attributes thereof are ordered, the media transmission right type with the basic attribute of being unauthorized and allowing the current user to apply in the media transmission right types is permitted to be authorized, and the authorization is performed according to the authorization precedence order in the authorization order attributes.

If the influence attributes are mutually-influencing between the media transmission right types carried in the media transmission right application and the authorization order attributes thereof are disordered, the media transmission right type with the basic attribute of being unauthorized and allowing the current user to apply in the media transmission right types is permitted to be authorized, and the authorization is performed according to an application order or the preset authorization order condition.

The authorization order condition includes the media transmission right attributes of various types of media transmission rights set at the control point by the operator, or the influence attributes and/or authorization order attributes identified in the media transmission right applications by the user.

After the Step B, the method further includes the following steps.

If the control point receives another later media transmission right application, and the authorization order attribute between a permitted media transmission right type in the later media transmission right application and the media transmission right type permitted and transmitting the media stream data in the earlier media transmission right application is ordered and identifying that the permitted media transmission right type in the later media transmission right application has an earlier authorization order, the control point revokes and interrupts the media transmission right already obtained in the earlier media transmission right application, and executes a media transmission right obtained in the later media transmission right application until the control point receives a media transmission right release notification of the later media transmission right application.

Or, the control point executes a media transmission right obtained in the later media transmission right application after the execution of the media transmission right already obtained in the earlier media transmission right application is completed.

The media transmission right release notification is that the user transmits a media transmission right release (Floor Release) message to the control point.

The control point transmits a media transmission right free (Floor Free) message to the other users in the group of the user after receiving the media transmission right release message.

The setting the media transmission right attributes includes setting, by the operator, the attributes at the control point, or setting or modifying, by the user, the attributes through a group data server for storing session attributes.

The setting or modifying, by the user, the attributes through the group data server includes setting or modifying, by the user, the attributes by accessing the WEB through a hypertext transfer protocol HTTP or an Extensible Markup Language (XML) Configuration Access Protocol XCAP or in a Session Initiation Protocol SIP manner.

The media transmission right application is a media transmission right request (Floor Request) message; the permit media transmission right response is a permit media transmission right (Floor Grant) message; the reject media transmission right response is a reject media transmission right (Floor Reject) message; and the accept response is an accept media transmission right (Floor Taken) message.

The media transmission right request message carries media transmission right type identifications for identifying the media transmission right types.

The control point is a server.

The present invention provides a processing method for media transmission right, which presets corresponding relations between media transmission right types and media transmission right attributes in a control point for performing a unified management on a multi-party communication. The method includes the following steps.

In Step al, a user applies for different types of media transmission rights to the control point through the same media transmission right application carrying multi-type media transmission rights, and the control point simultaneously judges the different media transmission rights according to media transmission right type identifications for identifying the media transmission right types carried in the media transmission right application and the corresponding media transmission right attributes of the media transmission right type identifications preset in the control point, and achieves an authorization result.

In Step b1, the control point gives a permitted media transmission right type in the media transmission right types to the user in the same media transmission right response, and transmits a corresponding accept response of the permitted media transmission right type to other users in the group of the user according to the authorization result.

In Step c1, the user transmits corresponding media stream data of the permitted media transmission right type to the other users in the group of the user.

The Step b1 further includes the control point gives a rejected media transmission right type in the media transmission right types to the user in the same media transmission right response according to the authorization result.

The present invention provides a processing method for media transmission right, which presets corresponding relations between media transmission right types and media transmission right attributes in a control point for performing a unified management on a multi-party communication. The method includes the following step.

In Step a2, a user applies for different types of media transmission rights to the control point through the same media transmission right application carrying multi-type media transmission rights, and the control point simultaneously judges the different media transmission rights according to media transmission right type identifications for identifying the media transmission right types carried in the media transmission right application and the corresponding media transmission right attributes of the media transmission right type identifications preset in the control point, and achieves an authorization result.

In Step b2, the control point respectively gives a permitted media transmission right type and a rejected media transmission right type in the media transmission right types to the user in different media transmission right responses, and transmits a corresponding accept response of the permitted media transmission right type to other users in the group of the user according to the authorization result;

In Step c2, the user transmits corresponding media stream data of the permitted media transmission right type to the other users in the group of the user.

The present invention provides a processing method for media transmission right, which presets corresponding relations between media transmission right types and media transmission right attributes in a control point for performing a unified management on a multi-party communication. The method includes the following steps.

In Step a3, a user applies for different types of media transmission rights to the control point through the same media transmission right application carrying multi-type media transmission rights, and the control point simultaneously judges the different media transmission rights according to media transmission right type identifications for identifying the media transmission right types carried in the media transmission right application and the corresponding media transmission right attributes of the media transmission right type identifications preset in the control point, and achieves an authorization result.;

In Step b3,. the control point in turn gives a corresponding permit media transmission right response of a permitted earlier media transmission right type in the media transmission right types to the user, and transmits corresponding accept responses of all permitted media transmission right types to other users in the group of the user, according to the authorization result and a preset precedence order of the different types of media transmission rights.

In Step c3, the user transmits corresponding media stream data of the currently permitted media transmission right type to the other users in the group of the user.

In Step d3, the control point in turn gives a corresponding permit media transmission right response of a permitted later media transmission right type in the media transmission right types to the user after receiving a corresponding media transmission right release request of the currently permitted media transmission right type, and then the procedure returns to the Step c3 until the corresponding media stream data of all the permitted media transmission right types of the user are transmitted.

The present invention provides a processing method for media transmission right, which presets corresponding relations between media transmission right types and media transmission right attributes in a control point for performing a unified management on a multi-party communication. The method includes the following steps.

In Step a4, a user applies for different types of media transmission rights to the control point through the same media transmission right application carrying multi-type media transmission rights, and the control point simultaneously judges the different media transmission rights according to media transmission right type identifications for identifying the media transmission right types carried in the media transmission right application and the corresponding media transmission right attributes of the media transmission right type identifications preset in the control point, and achieves an authorization result.

In Step b4., the control point in turn gives a corresponding permit media transmission right response of a permitted earlier media transmission right type in the media transmission right types to the user, and transmits a corresponding accept response of the permitted earlier media transmission right type to other users in the group of the user, according to the authorization result and a preset precedence order of the different types of media transmission rights.;

In Step c4, the user transmits corresponding media stream data of the currently permitted media transmission right type to the other users in the group of the user.

In Step d4, the control point in turn gives a corresponding permit media transmission right response of a permitted later media transmission right type in the media transmission right types to the user, and transmits a corresponding accept response of the permitted later media transmission right type to the other users in the group of the user after receiving a corresponding media transmission right release request of the currently permitted media transmission right type, and then the procedure returns to the Step c4 until the corresponding media stream data of all the permitted media transmission right types of the user are transmitted.

The present invention provides a processing method for media transmission right, which presets corresponding relations between media transmission right types and media transmission right attributes in a control point for performing a unified management on a multi-party communication. The method includes the following steps.

In Step a5, a user applies for an earlier media transmission right to the control point through a media transmission right application, and the control point judges the earlier media transmission right according to earlier media transmission right type identifications for identifying the media transmission right types carried in the media transmission right application and the corresponding media transmission right attributes of the media transmission right type identifications preset in the control point, and achieves an authorization result.

In Step b5, the control point gives a permit media transmission right response of a permitted earlier media transmission right type to the user, and transmits a corresponding accept response of the permitted earlier media transmission right type to other users in the group of the user according to the authorization result; and the user transmits corresponding media stream data of the permitted earlier media transmission right type to the other users in the group of the user.

In Step c5, the control point receives a later media transmission right application of the user applying for the earlier media transmission right or other user applying for the later media transmission right in the group of the user, and judges that an authorization result of the later media transmission right is permitted.

In Step d5, the control point gives a corresponding permit media transmission right response of the later media transmission right type to the user applying for the earlier media transmission right or the user applying for the later media transmission right, and transmits a corresponding accept response of a permitted later media transmission right type to the other users in the group of the user applying for the earlier media transmission right or the user applying for the later media transmission right, after receiving an earlier media transmission right release request from the user applying for the earlier media transmission right, and the user applying for the earlier media transmission right or the user applying for the later media transmission right transmits corresponding media stream data of the permitted later media transmission right type to the other users in the group of the user.

The Step d5 further includes the control point transmits a message indicating that the earlier media transmission right is free to the other users in the group of the user applying for the earlier media transmission right.

The present invention provides a processing method for media transmission right, which presets corresponding relations between media transmission right types and media transmission right attributes in a control point for performing a unified management on a multi-party communication. The method includes the following steps.

In Step a6, a user applies for a media transmission right to the control point through a media transmission right application, and the control point judges the earlier applied media transmission right according to media transmission right type identifications for identifying the media transmission right types carried in the media transmission right application and the corresponding media transmission right attributes of the media transmission right type identifications preset in the control point, and achieves an authorization result.

In Step b6, the control point gives a permit media transmission right response of a permitted media transmission right type to the user, and transmits a corresponding accept response of the permitted media transmission right type to other users in the group of the user according to the authorization result; and the user transmits corresponding media stream data of the permitted media transmission right type to the other users in the group of the user.

In Step c6, the control point receives a media transmission right application of the corresponding user of the earlier applied media transmission right or other user in the group of the user, judges that a media transmission right authorization result of the later applied media transmission right is permitted, and determines that an authorization order of the later applied media transmission right is before that of the earlier applied media transmission right according to the preset media transmission right attribute.

In Step d6, the control point revokes the earlier applied media transmission right, gives a corresponding permit media transmission right response of the later applied media transmission right type to the corresponding user of the later applied media transmission right, and transmits a corresponding accept response of the permitted later applied media transmission right type to the other users in the group of the corresponding user of the later applied media transmission right, and the corresponding user of the later applied media transmission right transmits corresponding media stream data of the permitted later applied media transmission right type to the other users in the group of the user.

In Step e6, the control point gives a corresponding permit media transmission right response of the earlier applied media transmission right type to the corresponding user of the earlier applied media transmission right, and transmits the corresponding accept response of the permitted earlier applied media transmission right type to the other users in the group of the corresponding user of the earlier applied media transmission right, after receiving a media transmission right release request of the later applied media transmission right from the corresponding user of the later applied media transmission right, and the corresponding user of the earlier applied media transmission right transmits the corresponding media stream data of the permitted earlier applied media transmission right type to the other users in the group of the user.

The revoking, by the control point, the earlier applied media transmission right in Step d6 includes transmitting, by the control point, a message to revoke the earlier applied media transmission right to the corresponding user of the earlier applied media transmission right, and returning, by the corresponding user of the earlier applied media transmission right, a release request for the earlier applied media transmission right to the control point.

In the Step d6, after the control point receives the release request for the earlier applied media transmission right, the method further includes transmitting, by the control point, a message indicating that the earlier media transmission right is free to the other users in the group of the user applying for the earlier media transmission right.

The present invention provides a processing method for media transmission right, which presets corresponding relations between media transmission right types and media transmission right attributes in a control point for performing a unified management on a multi-party communication. The method includes the following steps.

In Step a7, a user applies for a media transmission right to the control point through a media transmission right application, and the control point judges the media transmission right according to media transmission right type identifications for identifying the media transmission right types carried in the media transmission right application and the corresponding media transmission right attributes of the media transmission right type identifications preset in the control point, and achieves an authorization result.

In Step b7, the control point gives a permit or reject media transmission right response of a permitted or rejected media transmission right type to the user, and transmits a corresponding accept response of the permitted media transmission right type to other users in the group of the user according to the authorization result.

In Step c7, the user transmits corresponding media stream data of the permitted media transmission right type to the other users in the group of the user.

The present invention provides a processing device for media transmission right disposed in a multi-party communication system. The device includes a judgment module, a storage module, and a transmission module.

The judgment module is adapted to receive a media transmission right application carrying media transmission right types from a user, obtain a corresponding relation between the media transmission right type and a media transmission right attribute from the storage module, judge whether the received media transmission right application is authorized or not according to the corresponding relation, and transmit an authorization result obtained by the judgment to the transmission module.

The storage module is adapted to store the preset corresponding relations between the media transmission right types and the media transmission right attributes.

The transmission module is adapted to receive the authorization result from the judgment module, and transmit a media transmission right response and media stream data respectively to the user applying for the media transmission right and other users in the group of the user.

The transmission module transmits a corresponding permit media transmission right response of a permitted media transmission right type in the media transmission right types to the user, and transmits a corresponding accept response of the permitted media transmission right type to the other users in the group of the user; the user transmits corresponding media stream data of the permitted media transmission right type to the other users in the group of the user; and the transmission module transmits a corresponding reject media transmission right response of a rejected media transmission right type in the media transmission right types to the user.

The processing device for media transmission right is disposed in a control point for performing a unified management on a multi-party communication or is an independent entity.

It is obvious from the above technical schemes that, in the present invention, after a control point such as a server in a multi-party communication system receives a media transmission right application such as a media transmission right request message from a user, the control point performs judgment according to media transmission right types carried in the media transmission right application and corresponding relations between the media transmission right types and media transmission right attributes preset in the server itself, and achievss an authorization result. The control point transmits a corresponding permit media transmission right response of a permitted media transmission right type in the media transmission right types to the user, and transmits a corresponding accept response of the permitted media transmission right type to other users in the group of the user according to the authorization result; the user transmits corresponding media stream data of the permitted media transmission right type to the other users in the group of the user; and the control point transmits a corresponding reject media transmission right response of a rejected media transmission right type in the media transmission right types to the user. The other users mentioned here may be all remaining users in the group or part of the remaining users in the group which are specifically determined according to an actual configuration in the control point or a designation of the user initiating the media transmission right application.

The user may apply for different types of media transmission rights to the control point through the same media transmission right application carrying multi-type media transmission rights, that is, a parallel application, or apply for different types of media transmission rights in turn to the control point through different media transmission right applications, that is, a serial application. The control point may simultaneously judge the different types of media transmission rights and give the media transmission right response in the same permit and/or reject media transmission right response, that is, a parallel response, or simultaneously judge the different types of media transmission rights and respectively give different media transmission right responses in turn, or respectively judge the different types of media transmission rights and respectively give different media transmission right responses, that is, a serial response.

Relations between the different types of media transmission rights may be non-influencing, for example, the relation between a voice media transmission right and a background data media transmission right, or mutually-influencing, for example, the relation between the voice media transmission right and an FTP media transmission right. When the network transmission resources are limited, the user may revoke the obtained FTP media transmission right in obtaining the voice media transmission right, so as to save the transmission resources, thereby reducing the impact on the voice quality. The authorizations of the different types of media transmission rights may have precedence orders or not. The control point judges the media transmission right application according to corresponding media transmission right attributes of the different types of media transmission rights preset in the control point. The relations between the different types of media transmission rights may be indicated by influence attributes and authorization order attributes in the media transmission right attributes set in the server by the user or operator. The media transmission right attributes may also include basic attributes corresponding to the different types of media transmission rights, such as whether the type of media transmission right has currently been authorized or not, or whether the type of media transmission right allows the current applicant user to apply for the media transmission right or not.

The methods of the present invention realize a control of multiple media transmission rights for the request for multi-type media transmission rights provided by multimedia service for the multi-party communication. Besides, the present invention classifies the different types of media transmission rights, and realizes a rational control of the multiple media transmission rights according to the media transmission right attributes preset in the control point.

### BRIEF DESCRIPTION OF THE DRAWINGS

The present invention will become more fully understood from the detailed description given herein below for illustration only, and thus are not limitative of the present invention, and wherein:

FIG. 1 is a flow chart of a media transmission right processing in the prior art;

FIG. 2 is a flow chart of a media transmission right processing according to a first embodiment of the present invention;

FIG. 3 is a flow chart of the media transmission right processing according to a second embodiment of the present invention;

FIG. 4 is a flow chart of the media transmission right processing according to a third embodiment of the present invention;

FIG. 5 is a flow chart of the media transmission right processing according to a fourth embodiment of the present invention;

FIG. 6 is a flow chart of the media transmission right processing according to a fifth embodiment of the present invention;

FIG. 7 is a flow chart of the media transmission right processing according to a sixth embodiment of the present invention;

FIG. 8 is a flow chart of the media transmission right processing according to a seventh embodiment of the present invention; and

FIG. 9 is a schematic view illustrating a constitution of a media transmission right in the present invention.

### DETAILED DESCRIPTION OF THE EMBODIMENTS

The core idea of the present invention lies in that, after receiving a media transmission right application from a user, a control point in a multi-party communication system performs judgment according to media transmission right types carried in the application and corresponding relations between the media transmission right types and media transmission right attributes preset by the control point, and achieves an authorization result. The control point transmits a media transmission right response and an authorization response respectively to the user applying for the media transmission right and other users in the group of the user according to the authorization result.

In order to make the objectives, technical schemes and advantages of the present invention more comprehensible, preferred embodiments accompanied with figures are described in detail below.

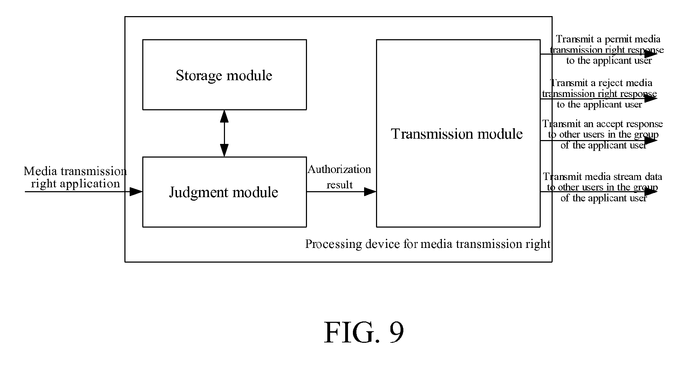

FIG. 9 is a schematic view illustrating a constitution of a processing device for media transmission right according to the present invention. As shown in FIG. 9, the processing device for media transmission right is disposed in a multi-party communication system and includes a judgment module, a storage module, and a transmission module.

A judgment module is adapted to receive a media transmission right application carrying media transmission right types from a user, obtain a corresponding relation between the media transmission right type and a media transmission right attribute from the storage module, judge whether the received media transmission right application is authorized or not according to the corresponding relation, and transmit an authorization result obtained by the judgment to the transmission module.

The storage module is adapted to store the preset corresponding relations between the media transmission right types and the media transmission right attributes.

The transmission module is adapted to receive the authorization result from the judgment module, and transmit media transmission right responses and media stream data respectively to the user applying for the media transmission right and other users in the group of the user.

The transmitting, by the transmission module, the media transmission right response and the media stream data respectively to the user applying for the media transmission right and the other users in the group of the user includes: transmitting, by the transmission module, a corresponding permit media transmission right response of a permitted media transmission right type in the media transmission right types to the user, and transmitting a corresponding accept response of the permitted media transmission right type to the other users in the group of the user; transmitting, by the user, the corresponding media stream data of the permitted media transmission right type to the other users in the group of the user; and transmitting, by the transmission module, a corresponding reject media transmission right response of a rejected media transmission right type in the media transmission right types to the user.

The processing device for media transmission right may be disposed in a control point for performing a unified management on the multi-party communication, or is an independent entity.

In the multi-party communication system, when multi-type media transmission rights exist in the media transmission right application, the control point needs to consider relations between various types of media transmission rights in the media transmission right attributes, so as to judge the media transmission right application by employing the preset media transmission right attributes and give a rational authorization result. In the present invention, the relations between different types of media transmission rights are classified into the following four kinds.

Non-influencing and disordered relation

Whether a certain type of media transmission right in different types of media transmission rights has been authorized or not does not influence the authorizations of other types of media transmission rights, and no precedence orders exist between the authorizations of the different types of media transmission rights. The control point may simultaneously or respectively authorize the different types of media transmission rights. For example, the relation between a voice type media transmission right such as the speech and a background data type media transmission right such as the message is non-influencing and disordered. Such non-influencing relation and disordered relation respectively correspond to an influence attribute and an authorization order attribute in the media transmission right attributes, that is, the influence attribute is non-influencing and the authorization order attribute is disordered.

2) Non-influencing but ordered relation

Whether a certain type of media transmission right in different types of media transmission rights has been authorized or not does not influence the authorizations of other types of media transmission rights, but precedence orders exist between the authorizations of the different types of media transmission rights. The control point needs to authorize the different types of media transmission rights in turn according to the precedence order. Even if a media transmission right with an earlier order is applied later, the control point needs to revoke and interrupt the currently obtained media transmission right and execute the media transmission right with the earlier order first until the media transmission right with the earlier order is released, or immediately turn to processing the later applied media transmission right with the earlier order after the execution of the current media transmission right with a later order is completed. For example, when the media transmission right application includes the voice type media transmission right and background data type media transmission right, if the control point sets the authorization order of the background data type media transmission right to be before that of the voice type media transmission right, the control point performs an authorization judgment on the background data type media transmission right first, and then judges whether the voice type media transmission right is authorized after the transmission of the background data stream is completed. Such non-influencing relation and ordered relation respectively correspond to the influence attribute and the authorization order attribute in the media transmission right attributes, that is, the influence attribute is non-influencing and the authorization order attribute is ordered and identifying precedence relations between the orders.

3) Mutually-influencing and ordered relation

Whether a certain type of media transmission right in different types of media transmission rights has been authorized or not influences the authorizations of other types of media transmission rights, and precedence orders exist between the authorizations of the different types of media transmission rights. The control point has to perform the authorization in turn according to the order of the different types of media transmission rights. For example, if the application includes the voice type media transmission right and an FTP type media transmission right, and the priority of the voice type media transmission right is preset to be higher than that of the FTP type media transmission right in the control point, the user revokes and interrupts the obtained FTP media transmission right in obtaining the voice media transmission right when the network transmission resources are limited. Such mutually-influencing relation and ordered relation respectively correspond to the influence attribute and the authorization order attribute in the media transmission right attributes, that is, the influence attribute is mutually-influencing and the authorization order attribute is ordered and identifying precedence relations between the orders. For example, the priority is employed to identify the precedence order of the authorizations, and a higher priority identifies an earlier authorization order and a lower priority identifies a later authorization order.

4) Mutually-influencing but disordered relation

Whether a certain type of media transmission right in different types of media transmission rights has been authorized or not influences the authorizations of other types of media transmission rights, but no precedence orders exist between the authorizations of the different types of media transmission rights. The control point may authorize the different types of media transmission rights in turn according to an application order or according to a preset authorization order condition, for example, an authorization order condition configured by the operator at the control point or identified by employing parameters of a session by the user. For example, the relation between the background data type media transmission right and the FTP type media transmission right is mutually-influencing but disordered. Such mutually-influencing relation and disordered relation respectively correspond to the influence attribute and the authorization order attribute in the media transmission right attributes, that is, the influence attribute is mutually-influencing and the authorization order attribute is disordered.

Particularly speaking, the configuring of the authorization order condition by the operator at the control point refers to that the operator configures attributes such as basic attributes of various types of media transmission rights, and then configures relations such as influence attributes and authorization order attributes between different types of media transmission rights at the control point. The identifying of the influence attribute and/or authorization order attribute as the authorization order condition by the user in the media transmission right application refers to that the operator sets the basic attribute of every type of media transmission right at the control point, and the user may set the influence attributes and/or authorization order attributes between the media transmission right types in the application when applying for the media transmission right. For example, in one application, the user may set the voice media transmission right and a video media transmission right to be mutually-influencing, and then the control point does not simultaneously permit the two media transmission rights to the user. For another example, in another application, the user may set the voice media transmission right and the video media transmission right to be non-influencing, and then the control point may simultaneously permit the two media transmission rights to the user.

The media transmission right attributes of the above different types of media transmission rights may be configured in the control point by the operator. Parameters of the media transmission right attributes may be directly set and modified by the user through a group data server for storing session attributes in a session, for example, by accessing the WEB through a hypertext transfer protocol (HTTP) or an Extensible Markup Language (XML) Configuration Access Protocol (XCAP) or by subscribing a notification in a Session Initiation Protocol (SIP) manner. The specific implementation of the setting and modifying manners are known to those skilled in the art and will not be repeated herein.

The method for the control point to judge and obtain a rational authorization result according to relations between the above different types of media transmission rights may include the following processes.

If the influence attributes are non-influencing between the media transmission right types carried in the media transmission right application and the authorization order attributes are disordered, the media transmission right type with the basic attribute of being unauthorized and allowing the current user to apply in the media transmission right types is permitted to be authorized, and the authorization is performed disorderedly.

If the influence attributes are non-influencing between the media transmission right types carried in the media transmission right application and the authorization order attribute are ordered, the media transmission right type with the basic attribute of being unauthorized and allowing the current user to apply in the media transmission right types is permitted to be authorized, and the authorization is performed according to an authorization precedence order in the authorization order attributes.

If the influence attributes are mutually-influencing between the media transmission right types carried in the media transmission right application and the authorization order attributes are ordered, the media transmission right type with the basic attribute of being unauthorized and allowing the current user to apply in the media transmission right types is permitted to be authorized, and the authorization is performed according to the authorization precedence order in the authorization order attributes.

If the influence attributes are mutually-influencing between the media transmission right types carried in the media transmission right application and the authorization order attributes are disordered, the media transmission right type with the basic attribute of being unauthorized and allowing the current user to apply in the media transmission right types is permitted to be authorized, and the authorization is performed according to an application order or the preset authorization order condition.

For the relations between different types of media transmission rights, if one user in a certain group applies for media transmission rights of types A and B, which are called media transmission rights A and B for short, and a server is preset with media transmission right attributes of the media transmission rights A and B, the method of the present invention is described in detail with embodiments as follows.

A first embodiment is described. FIG. 2 is a flow chart of a media transmission right processing according to the first embodiment of the present invention. Referring to FIG.2, it is assumed that the relation between the media transmission rights A and B is non-influencing and disordered, a user terminal (UE) applies for the media transmission rights A and B in parallel, and a server responds to a judgment of the media transmission rights A and B in parallel, the specific implementation includes the following steps.

In Steps 200-201, a user initiating the applications transmits a request message for the media transmission rights A and B (Floor[A&B] Request) to the server through the UE1, and the server judges the media transmission rights according to media transmission right type identifications for identifying media transmission right types carried in the Floor[A&B] Request message and corresponding media transmission right attributes of the media transmission right type identifications preset in the control point.

The Floor[A&B] Request message carries the media transmission right type identifications of the media transmission rights A and B. The server identifies the currently applied media transmission rights A and B according to the media transmission right type identifications carried in the Floor[A&B] Request message, and performs a permission or rejection according to the corresponding media transmission right attributes of the media transmission rights A and B.

In this embodiment, the corresponding media transmission right attributes of the media transmission rights A and B include an influence attribute of being non-influencing and an authorization order attribute of being disordered. If a basic attribute in the media transmission right attributes includes that neither of the media transmission rights A and B is authorized and the UE1 has the right to apply for the media transmission rights A and B, the server permits the media transmission rights A and B, and the authorization is performed disorderedly.

In Steps 202-203, the server transmits a message to permit the media transmission rights A and B (Floor[A&B] Grant) to the UE1 and transmits a message to accept the media transmission rights A and B (Floor[A&B] Taken) to other UEs in the group of the UE 1.

In Step 204, the UE1 transmits data of media streams A and B to the other UEs in the group of the UE 1.

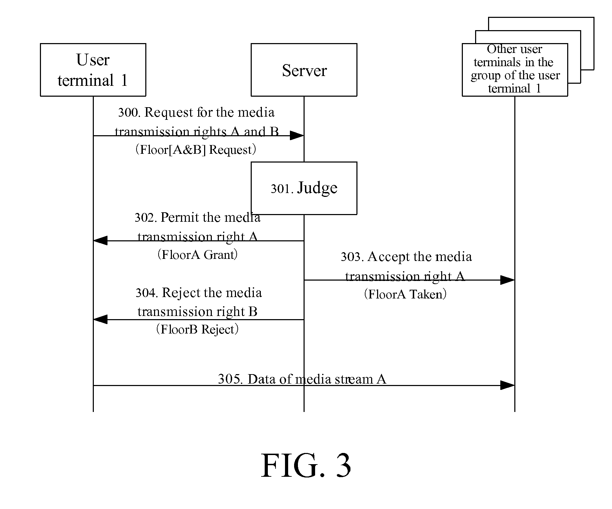

A second embodiment is described. FIG. 3 is a flow chart of the media transmission right processing according to the second embodiment of the present invention. Referring to FIG. 3, it is assumed that the relation between the media transmission rights A and B is non-influencing and disordered, a user terminal applies for the media transmission rights A and B in parallel, and a server respectively responds to the media transmission rights A and B in series after simultaneously judging them, the specific implementation includes the following steps.

In Steps 300-301, a user initiating the applications transmits a Floor[A&B] Request message to the server through the UE1, and the server judges the media transmission rights according to media transmission right type identifications carried in the Floor[A&B] Request message and corresponding media transmission right attributes of the media transmission right type identifications preset in the control point.

The specific implementation in this step is completely identical to that in Steps 200-201 and will not be repeated herein.

In this embodiment, the corresponding media transmission right attributes of the media transmission rights A and B include an influence attribute of being non-influencing and an authorization order attribute of being disordered. If a basic attribute in the media transmission right attributes includes that neither of the media transmission rights A and B is authorized and the UE1 has the right to apply for the media transmission right A and has no right to apply for the media transmission right B, the server permits the media transmission right A and rejects the media transmission right B.

In Steps 302-303, the server transmits a permit media transmission right A (FloorA Grant) message to the UE1, and transmits an accept media transmission right A (FloorA Taken) message to other UEs in the group of the UE1.

In Step 304, the server transmits a reject media transmission right B (FloorB Reject) message to the UE1.

In Step 305, the UE1 transmits data of a media stream A to the other UEs in the group of the UE1.

In this embodiment, for example, if the basic attribute includes that neither of the media transmission rights A and B is authorized and the UE1 has no right to apply for the media transmission rights A and B, the server judges to reject the media transmission rights A and B, and the server may transmit a message to reject the media transmission rights A and B (Floor[A&B] Reject) to the UE1 or respectively transmit a reject media transmission right A (FloorA Reject) message and the FloorB Reject message before this process ends.

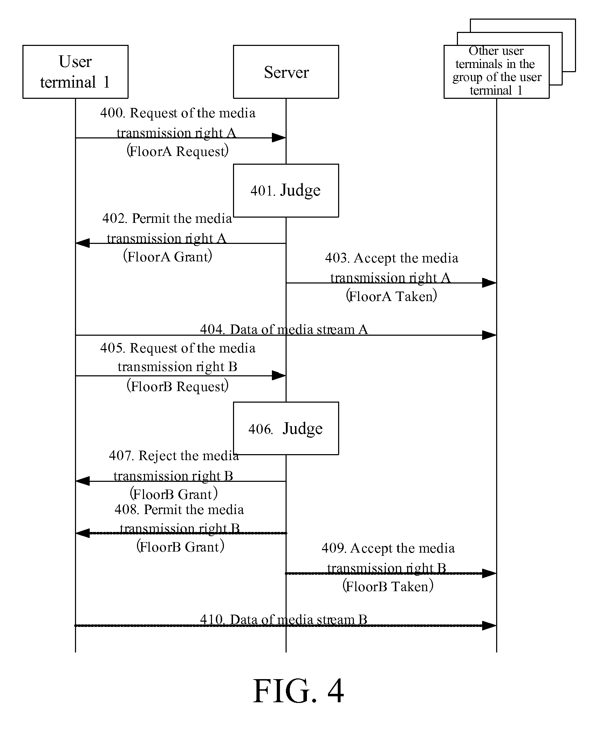

A third embodiment is described. FIG. 4 is a flow chart of the media transmission right processing according to the third embodiment of the present invention. Referring to FIG. 4, it is assumed that the relation between the media transmission rights A and B is non-influencing and disordered, a user terminal applies for the media transmission rights A and B in series, and a server respectively responds to the media transmission rights A and B in series after respectively judging them, the specific implementation includes the following steps.

In Steps 400-401, a user initiating the applications transmits a media transmission right A request (FloorA Request) message to the server through the UE1, and the server judges the media transmission right according to media transmission right type identifications carried in the FloorA Request message and corresponding media transmission right attributes of the media transmission right type identifications preset in the control point.

The specific implementation in this step is completely identical to that in Steps 200-201 and will not be repeated herein.

In this embodiment, if a basic attribute of the media transmission right A includes that the media transmission right A is not authorized and the UE1 has the right to apply for the media transmission right A, the server permits the media transmission right A.

In Steps 402-404, the server transmits a FloorA Grant message to the UE1 and transmits a FloorA Taken message to other UEs in the group of the UE1, and then the UE1 transmits data of a media stream A to the other UEs in the group of the UE1.

In Steps 405-406, the UE1 transmits a media transmission right B request (FloorB Request) message to the server, and the server judges the media transmission right according to media transmission right type identifications carried in the FloorB Request message and corresponding media transmission right attributes of the media transmission right type identifications preset in the control point.

In this embodiment, the corresponding media transmission right attributes of the media transmission right B and the currently authorized media transmission right A include an influence attribute of being non-influencing and an authorization order attribute of being disordered. If a basic attribute of the media transmission right B includes that the media transmission right B has been authorized and the UE1 has the right to apply for the media transmission right B, the server rejects the media transmission right B.

In Step 407, the server transmits a FloorB Reject message to the UE1.

In this embodiment, if in Steps 405-406, the basic attribute of the media transmission right B includes that the media transmission right B is not authorized and the UE1 has the right to apply for the media transmission right B, the server permits the media transmission right B, and then the procedure proceeds to Steps 408-410 instead of Step 407. In the Steps 408-410, the server transmits a FloorB Grant message to the UE1 and transmits a FloorB Taken message to other UEs in the group, and then the UE1 transmits data of a media stream B to the other UEs in the group of the UE1.

In addition, in this embodiment, if the applications for the media transmission rights A and B are not limited to the same user in the media transmission right attributes in the server, the request for the media transmission right B in Steps 405-406 may be made by other users, and have the same specific implementation as that in Steps 405-407 or Steps 405-406 and Steps 408-410. If the applications for the media transmission rights A and B are limited to the same user in the media transmission right attributes in the server, the server rejects the application for the media transmission right B made by other users, and the other users can apply again only after the media transmission right A is released.

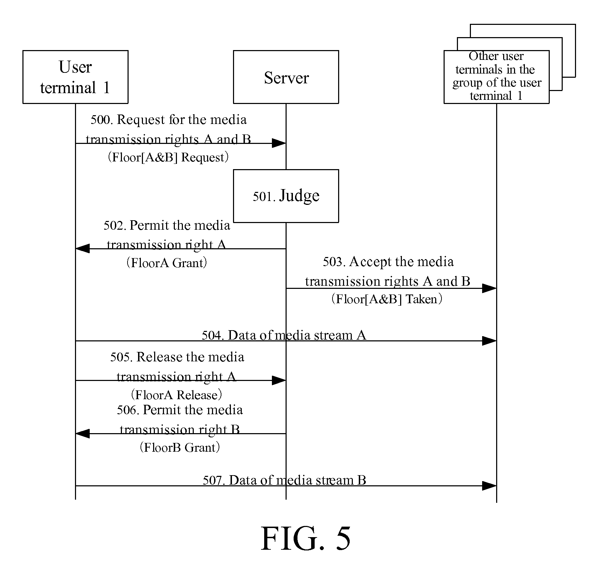

A fourth embodiment is described. FIG. 5 is a flow chart of the media transmission right processing according to the fourth embodiment of the present invention. Referring to FIG. 4, it is assumed that the relation between the media transmission rights A and B is non-influencing but ordered, a user terminal applies for the media transmission rights A and B in parallel, a server respectively responds to the media transmission rights A and B in series according to an order after simultaneously judging them, and the specific implementation includes the following steps.

In Steps 500-502, a user initiating the applications transmits a Floor[A&B] Request message to the server through the UE1, the server judges the media transmission rights according to media transmission right type identifications carried in the Floor[A&B] Request message and corresponding media transmission right attributes of the media transmission right type identifications preset in the control point, and the server transmits a FloorA Grant message to the UE1.

In this embodiment, the corresponding media transmission right attributes of the media transmission rights A and B include an influence attribute of being non-influencing and an authorization order attribute of being ordered, and it is assumed that the media transmission right A is authorized earlier and the media transmission right B is authorized later. If a basic attribute in the media transmission right attributes includes that neither of the media transmission rights A and B is authorized and the UE1 has the right to apply for the media transmission rights A and B, the server permits the media transmission rights A and B, and the authorizations are performed in order, that is, the media transmission right A is authorized earlier and the media transmission right B is authorized later.

Since the media transmission right A is authorized earlier, in this step, the server only transmits the FloorA Grant message in turn to the UE 1. At this time, the server sets the attribute of whether the media transmission right B has been authorized or not in the basic attribute of the authorized media transmission right B to be authorized until the use of the media transmission right B ends.

In Steps 503-504, the server transmits a Floor[A&B] Taken message to other UEs in the group of the UE1, and the UE1 transmits data of a media stream A to the other UEs in the group of the UE1.

In this embodiment, the server transmits permit media transmission right responses in turn to the UE1, but simultaneously transmits a response to accept the media transmission rights A and B to the other UEs in the group of the UE1.

In Steps 505-506, the server transmits a FloorB Grant message to the UE1 after receiving a media transmission right A release (FloorA Release) message from the UE 1.

In Step 507, the UE1 transmits data of a media stream B to the other UEs in the group of the UE 1.

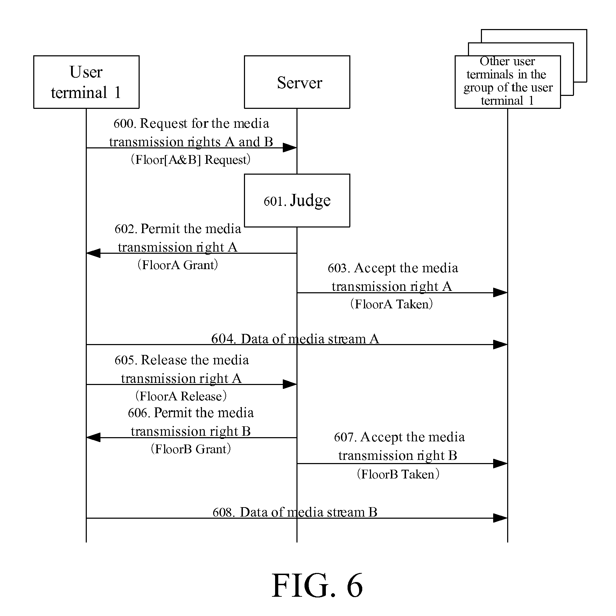

A fifth embodiment is described. FIG. 6 is a flow chart of the media transmission right processing according to the fifth embodiment of the present invention. Referring to FIG. 6, it is assumed that the relation between the media transmission rights A and B is non-influencing but ordered, and the media transmission right A is authorized earlier and the media transmission right B is authorized later, a user terminal applies for the media transmission rights A and B in parallel, and a server respectively responds to the media transmission rights A and B in series according to an order after simultaneously judging them, the specific implementation includes the following steps.

In Steps 600-602, a user initiating the applications transmits a Floor[A&B] Request message to the server through the UE1, the server judges the media transmission rights according to media transmission right type identifications carried in the Floor[A&B] Request message and corresponding media transmission right attributes of the media transmission right type identifications preset in the control point, and the server transmits a FloorA Grant message to the UE1.

The specific implementation is completely identical to that in Steps 500-502 and will not be repeated herein. Similarly, the server sets the attribute of whether the media transmission right B has been authorized or not in the basic attribute of the authorized media transmission right B to be authorized until the use of the media transmission right B ends, and the media transmission right B is not authorized again.

In Steps 603-604, the server transmits a FloorA Taken message to other UEs in the group of the UE1, and the UE1 transmits data of a media stream A to the other UEs in the group of the UE1.

In Steps 605-607, the server transmits a FloorB Grant message to the UE1 and transmits a FloorB Taken message to accept the media transmission right B to the other UEs in the group of the UE1, after receiving a FloorA Release message to release the media transmission right A from the UE 1.

In this embodiment, the server transmits permit media transmission right responses in turn to the UE1, and transmits accept media transmission right responses in turn to the other UEs in the group of the UE1.

In Step 608, the UE1 transmits data of a media stream B to the other UEs in the group of the UE1.

It should be explained that, if the user needs to apply for three media transmission rights, the user may first apply through the same media transmission right application carrying two media transmission rights and then apply through another media transmission right application carrying the third media transmission right, or first apply through one media transmission right application carrying one of the media transmission rights and then apply through another media transmission right application simultaneously carrying the other two media transmission rights, and so on.

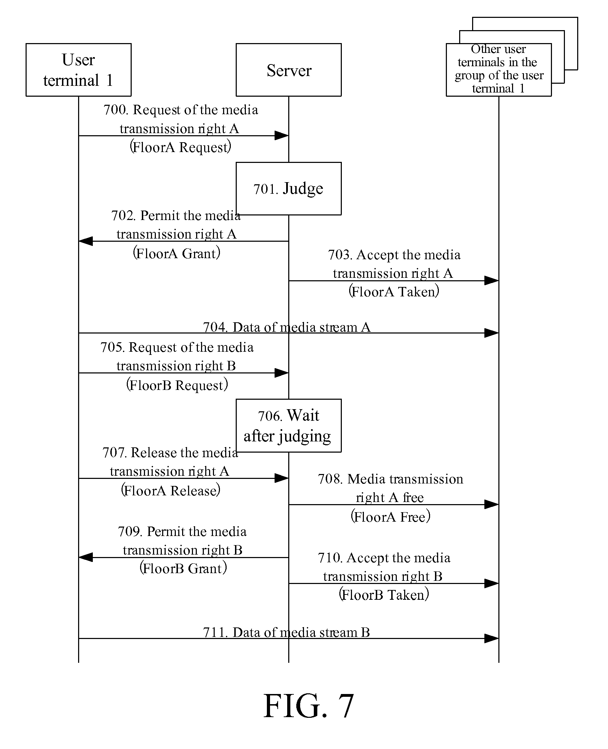

A sixth embodiment is described. FIG. 7 is a flow chart of the media transmission right processing according to the sixth embodiment of the present invention. Referring to FIG. 7, it is assumed that the relation between the media transmission rights A and B is non-influencing but ordered, a user terminal applies for the media transmission rights A and B in series, and a server respectively responds to the media transmission rights A and B in series according to an order after judging them in turn, the specific implementation includes the following steps.

In Steps 700-702, a user initiating the applications transmits a FloorA Request message to the server through the UE1, the server judges the media transmission right according to media transmission right type identifications carried in the FloorA Request message and corresponding media transmission right attributes of the media transmission right type identifications preset in the control point, and the server transmits a FloorA Grant message to the UE1.

The specific implementation is completely identical to that in Steps 500-502 in which only the media transmission right A is judged and permitted in this embodiment, and will not be repeated herein.

In Steps 703-704, the server transmits a FloorA Taken message to other UEs in the group of the UE1, and the UE1 transmits data of a media stream A to the other UEs in the group of the UE1.

In Steps 705-706, the UE1 transmits a FloorB Request message to the server, and the server waits for a release of the media transmission right A after judging the media transmission right according to media transmission right type identifications carried in the FloorB Request message and corresponding media transmission right attributes of the media transmission right type identifications preset in the control point.

The specific implementation is completely identical to that in Steps 500-502 in which only the media transmission right B is judged and permitted in this embodiment, and will not be repeated herein.

It should be noted that, the FloorB Request message to request the media transmission right B in this step may also be made by other users.

In Steps 707-708, the server transmits a media transmission right A free (FloorA Free) message to the other UEs in the group of the UE1 after receiving a FloorA Release message from the UE1.

In Steps 709-710, the server transmits a FloorB Grant message to the UE1, and transmits a FloorB Taken message to the other UEs in the group of the UE1.

In this embodiment, the server judges the media transmission right applications in turn, transmits permit media transmission right responses in turn to the UE1, and transmits accept media transmission right responses in turn to the other UEs in the group of the UE1.

In Step 711, the UE1 transmits data of a media stream B to the other UEs in the group of the UE 1.

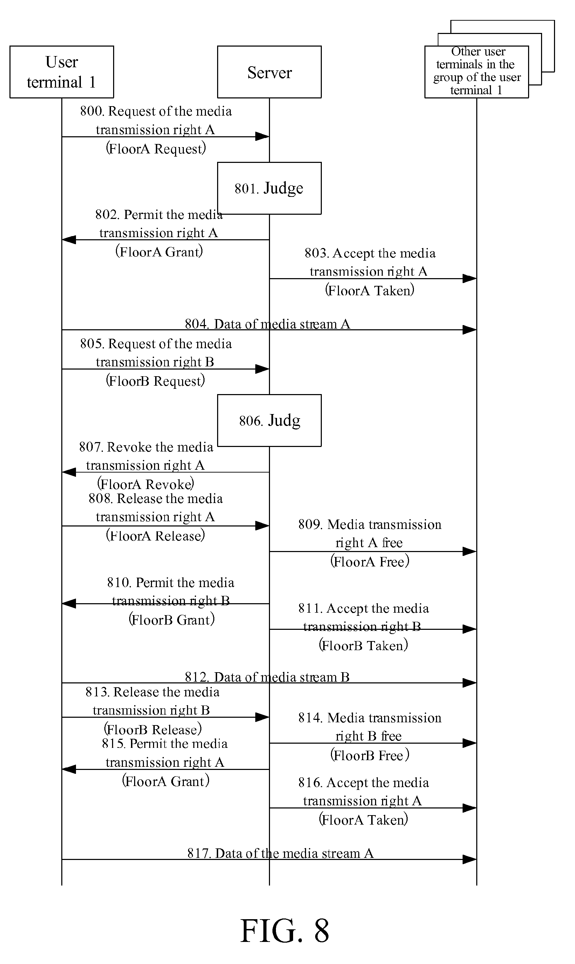

A seventh embodiment is described. FIG. 8 is a flow chart of the media transmission right processing according to the seventh embodiment of the present invention. Referring to FIG. 8, it is assumed that the relation between the media transmission rights A and B is non-influencing but ordered, a user terminal applies for the media transmission rights A and B in series, and a server respectively responds to the media transmission rights A and B in series according to an order after judging them in turn. This embodiment differs from the sixth embodiment in that an authorization order attribute of the earlier applied media transmission right A is later authorized while an authorization order attribute of the later applied media transmission right B is earlier authorized. The specific implementation includes the following steps:

The implementation of Steps 800-805 is completely identical to that of Steps 700-705 and will not be repeated herein.

In Steps 806-809, the server transmits a revoke media transmission right A (FloorA Revoke) request to the UE1 after judging that the media transmission right B is permitted; the UE1 transmits a FloorA Release message to the server, and the server transmits a FloorA Free message to other UEs in the group of the UE1.

Here, after judging that the media transmission right B is permitted, the server may select to set the attribute of whether the media transmission right A has been authorized or not in the basic attribute of the authorized media transmission right A to be authorized until the use of the media transmission right A ends and the media transmission right A is not authorized again, or set the attribute of whether the media transmission right A has been authorized or not in the basic attribute of the authorized media transmission right A to be unauthorized. In this step, it is assumed that the server sets the attribute of whether the media transmission right A has been authorized or not in the basic attribute of the authorized media transmission right A to be authorized.

In Steps 810-812, the server transmits a FloorB Grant message to the UE1 and transmits a FloorB Taken message to the other UEs in the group of the UE1; and the UE1 transmits data of a media stream B to the other UEs in the group of the UE1.

In Steps 813-814, the server transmits a media transmission right B free (FloorB Free) message to the other UEs in the group of the UE1 after receiving a FloorB Release message from the UE1.

In Steps 815-817, the server transmits a FloorA Grant message to the UE1 and transmits a FloorA Taken message to the other UEs in the group of the UE1; and the UE1 transmits data of a media stream A to the other UEs in the group of the UE1.

For requests including different types of media transmission rights with an influence attribute of being mutually-influencing and an authorization order attribute of being disordered, the media transmission right applications may be parallel applications or serial applications. However, since the different types of media transmission rights influence each other, the media stream data cannot be transmitted simultaneously. That is to say, the responses of the server to the different types of media transmission rights can only be a serial response, that is, the server permits the requests and transmits the media stream data or rejects the requests one by one, and the requests may be partly or fully rejected during the rejection. For example, the flow charts shown in FIGs. 3 and 4 may be employed. In addition, for permitted media transmission right types, the server may set an authorization order condition according to which the media stream data of the different types of media transmission rights is transmitted. The authorization order condition may be an authorization order condition configured at a control point by the user or operator or identified by parameters of a session. The user may modify attribute parameters of the group by the system according to the user's requirements or settings when establishing the session. For example, if the user sets the authorization order attribute of the media transmission rights A and B as ordered, the server processes the media transmission rights according to the authorization order attribute.

For requests including different types of media transmission rights with an influence attribute of being mutually-influencing and an authorization order attribute of being ordered, the media transmission right applications may be parallel applications or serial applications. However, since the different types of media transmission rights influence each other and the authorizations are ordered, the media stream data cannot be transmitted simultaneously. That is to say, the responses of the server to the different types of media transmission rights can only be serial responses, that is, the server permits the requests and transmits the media stream data or rejects the requests in turn according to the order. The requests may be partly or fully rejected during the rejection. For example, the flow charts shown in FIGs. 6, 7, and 8 may be employed.

Though the preferred embodiments of the present invention have been described above, they are not intended to limit the present invention. Any modifications, equivalent substitutions, and improvements made within the spirit and scope of the present invention fall within the scope of the present invention.

## Claims

1. A processing method for media transmission right, **characterized by** presetting corresponding relations between media transmission right types and media transmission right attributes in a control point, the control point being used for performing a unified management on a multi-party communication in a multi-party communication system, the method further comprising:
A. receiving, by the control point, a media transmission right application from a user, judging according to corresponding media transmission right attributes of media transmission right types carried in the media transmission right application and achieving an authorization result; and
B. transmitting, by the control point, a media transmission right response and media stream data respectively to the user applying the media transmission right and other users in a group of the user according to the authorization result.

2. The method according to claim 1, **characterized in that** the transmitting the media transmission right response and the media stream data in the Step B comprises:
transmitting, by the control point, a corresponding permit media transmission right response of a permitted media transmission right type in the media transmission right types to the user, and transmitting a corresponding accept response of the permitted media transmission right type to the other users in the group of the user; transmitting, by the user, the corresponding media stream data of the permitted media transmission right type to the other users in the group of the user; and transmitting, by the control point, a corresponding reject media transmission right response of a rejected media transmission right type in the media transmission right types to the user.

3. The method according to claim 1, **characterized in that** the user applies the media transmission right, and the applying action comprises:
applying, by the user, for different types of media transmission rights to the control point through the same media transmission right application carrying multi-type media transmission rights; or
applying, by the user, for different types of media transmission rights in turn to the control point through different media transmission right applications each carrying one type of or multi-type media transmission right(s).

4. The method according to claim 1 or 3, **characterized in that** the media transmission right response transmitting action comprises:
simultaneously judging, by the control point, the different types of media transmission rights, and giving the media transmission right response in the same permit or reject media transmission right response; or
simultaneously judging, by the control point, the different types of media transmission rights, and respectively giving different media transmission right responses in turn; or
respectively judging, by the control point, the different types of media transmission rights, and respectively giving different media transmission right responses.

5. The method according to claim 1 or 2, **characterized in that** the media transmission right attributes comprise:
respective basic attributes of the different types of media transmission rights, influence attributes for identifying whether the different types of media transmission rights influence each other or not, and authorization order attributes for identifying whether authorization orders exist between the different types of media transmission rights or not and identifying a precedence order relation of the authorizations.

6. The method according to claim 5, **characterized in that** the basic attributes comprise whether the type of media transmission right itself has currently been authorized or not, and whether the type of media transmission right itself allows the current user to apply or not.

7. The method according to claim 6, **characterized in that** the judging and achieving the judgment result comprises:
permitting the media transmission right type with the basic attribute of being unauthorized and allowing the current user to apply in the media transmission right types to be authorized, and performing the authorization disorderly or according to a preset authorization order condition, if the influence attributes are non-influencing between the media transmission right types carried in the media transmission right application and the authorization order attributes are disordered;
permitting the media transmission right type with the basic attribute of being unauthorized and allowing the current user to apply in the media transmission right types to be authorized, and performing the authorization according to the authorization precedence order in the authorization order attributes, if the influence attributes are non-influencing between the media transmission right types carried in the media transmission right application and the authorization order attributes are ordered;
permitting the media transmission right type with the basic attribute of being unauthorized and allowing the current user to apply in the media transmission right types to be authorized, and performing the authorization according to the authorization precedence order in the authorization order attributes, if the influence attributes are mutually-influencing between the media transmission right types carried in the media transmission right application and the authorization order attributes are ordered; and
permitting the media transmission right type with the basic attribute of being unauthorized and allowing the current user to apply in the media transmission right types to be authorized, and performing the authorization according to an application order or the preset authorization order condition, if the influence attributes are mutually-influencing between the media transmission right types carried in the media transmission right application and the authorization order attributes are disordered.

8. The method according to claim 7, **characterized in that** the authorization order condition comprises the media transmission right attributes of various types of media transmission rights set at the control point by the operator; or the influence attributes and/or authorization order attributes identified in the media transmission right applications by the user.

9. The method according to claim 1 or 2, **characterized in that** after the Step B, the method further comprises:
revoking and interrupting, by the control point, the media transmission right already obtained in an earlier media transmission right application, and executing a media transmission right obtained in another later media transmission right application until the control point receives a media transmission right release notification of the later media transmission right application, if the control point receives the later media transmission right application, and the authorization order attribute between a permitted media transmission right type in the later media transmission right application and the media transmission right type permitted and transmitting the media stream data in the earlier media transmission right application is ordered and identifying that the permitted media transmission right type in the later media transmission right application has an earlier authorization order; or,
executing, by the control point, a media transmission right obtained in the later media transmission right application after an execution of the media transmission right already obtained in the earlier media transmission right application is completed.

10. The method according to claim 9, **characterized in that** the media transmission right release notification comprises transmitting, by the user, a media transmission right release (Floor Release) message to the control point.

11. The method according to claim 10, **characterized in that** the control point transmits a media transmission right free (Floor Free) message to the other users in the group of the user after receiving the media transmission right release message.

12. The method according to claim 1, **characterized in that** the setting the media transmission right attributes comprises setting, by the operator, the attributes at the control point; or setting or modifying, by the user, the attributes through a group data server for storing session attributes.

13. The method according to claim 12, **characterized in that** the setting or modifying, by the user, the attributes through the group data server comprises setting or modifying, by the user, the attributes by accessing the WEB through a hypertext transfer protocol (HTTP) or an Extensible Markup Language (XML) Configuration Access Protocol (XCAP), or in a Session Initiation Protocol SIP manner.

14. The method according to claim 1, **characterized in that** the media transmission right application is a media transmission right request (Floor Request) message; the permit media transmission right response is a permit media transmission right (Floor Grant) message; the reject media transmission right response is a reject media transmission right (Floor Reject) message; the accept response is an accept media transmission right (Floor Taken) message; and
the media transmission right request message carries media transmission right type identifications for identifying the media transmission right types.

15. The method according to claim 1, **characterized in that** the control point is a server.

16. A processing method for media transmission right, **characterized by** presetting corresponding relations between media transmission right types and media transmission right attributes in a control point, the control point being used for performing a unified management on a multi-party communication, the method comprising:
al. applying, by a user, for different types of media transmission rights to the control point through the same media transmission right application carrying multi-type media transmission rights, and simultaneously judging, by the control point, the different media transmission rights according to media transmission right type identifications for identifying the media transmission right types carried in the media transmission right application and the corresponding media transmission right attributes of the media transmission right type identifications preset in the control point, and achieving an authorization result;
b1. giving, by the control point, a permitted media transmission right type in the media transmission right types to the user in the same media transmission right response, and transmitting a corresponding accept response of the permitted media transmission right type to other users in a group of the user according to the authorization result; and
c1. transmitting, by the user, corresponding media stream data of the permitted media transmission right type to the other users in the group of the user.

17. The method according to claim 16, **characterized in that** the Step b1 further comprises giving, by the control point, a rejected media transmission right type in the media transmission right types to the user in the same media transmission right response according to the authorization result.

18. A processing method for media transmission right, **characterized by** presetting corresponding relations between media transmission right types and media transmission right attributes in a control point, the control point being used for performing a unified management on a multi-party communication, the method comprising:
a2. applying, by a user, for different types of media transmission rights to the control point through the same media transmission right application carrying multi-type media transmission rights, and simultaneously judging, by the control point, the different media transmission rights according to media transmission right type identifications for identifying the media transmission right types carried in the media transmission right application and the corresponding media transmission right attributes of the media transmission right type identifications preset in the control point, and obtaining an authorization result;
b2. respectively giving, by the control point, a permitted media transmission right type and a rejected media transmission right type in the media transmission right types to the user in different media transmission right responses, and transmitting a corresponding accept response of the permitted media transmission right type to other users in a group of the user according to the authorization result; and
c2. transmitting, by the user, corresponding media stream data of the permitted media transmission right type to the other users in the group of the user.

19. A processing method for media transmission right, **characterized by** presetting corresponding relations between media transmission right types and media transmission right attributes in a control point, the control point being used for performing a unified management on a multi-party communication, the method comprising:
a3. applying, by a user, for different types of media transmission rights to the control point through the same media transmission right application carrying multi-type media transmission rights, and simultaneously judging, by the control point, the different media transmission rights according to media transmission right type identifications for identifying the media transmission right types carried in the media transmission right application and the corresponding media transmission right attributes of the media transmission right type identifications preset in the control point, and obtaining an authorization result;
b3. in turn giving, by the control point, a corresponding permit media transmission right response of a permitted earlier media transmission right type in the media transmission right types to the user, and transmitting corresponding accept responses of all permitted media transmission right types to other users in a group of the user, according to the authorization result and a preset precedence order of the different types of media transmission rights;
c3. transmitting, by the user, corresponding media stream data of the currently permitted media transmission right type to the other users in the group of the user; and
d3. in turn giving, by the control point, a corresponding permit media transmission right response of a permitted later media transmission right type in the media transmission right types to the user after receiving a corresponding media transmission right release request of the currently permitted media transmission right type, and then returning to the Step c3 until the corresponding media stream data of all the permitted media transmission right types of the user are transmitted.

20. A processing method for media transmission right, **characterized by** presetting corresponding relations between media transmission right types and media transmission right attributes in a control point, the control point being used for performing a unified management on a multi-party communication, the method comprising:
a4. applying, by a user, for different types of media transmission rights to the control point through the same media transmission right application carrying multi-type media transmission rights, and simultaneously judging, by the control point, the different media transmission rights according to media transmission right type identifications for identifying the media transmission right types carried in the media transmission right application and the corresponding media transmission right attributes of the media transmission right type identifications preset in the control point, and obtaining an authorization result;
b4. in turn giving, by the control point, a corresponding permit media transmission right response of a permitted earlier media transmission right type in the media transmission right types to the user, and transmitting a corresponding accept response of the permitted earlier media transmission right type to other users in a group of the user, according to the authorization result and a preset precedence order of the different types of media transmission rights;
c4. transmitting, by the user, corresponding media stream data of the currently permitted media transmission right type to the other users in the group of the user; and
d4. in turn giving, by the control point, a corresponding permit media transmission right response of a permitted later media transmission right type in the media transmission right types to the user, transmitting a corresponding accept response of the permitted later media transmission right type to the other users in the group of the user after receiving a corresponding media transmission right release request of the currently permitted media transmission right type, and then returning to the Step c4 until the corresponding media stream data of all the permitted media transmission right types of the user are transmitted.

21. A processing method for media transmission right, **characterized by** presetting corresponding relations between media transmission right types and media transmission right attributes in a control point, the control point being used for performing a unified management on a multi-party communication, the method comprising:
a5. applying, by a user, for an earlier media transmission right to the control point through a media transmission right application, and judging, by the control point, the earlier media transmission right according to earlier media transmission right type identifications for identifying the media transmission right types carried in the media transmission right application and the corresponding media transmission right attributes of the media transmission right type identifications preset in the control point, and obtaining an authorization result;
b5. giving, by the control point, a permit media transmission right response of the earlier media transmission right of a permitted type to the user, and transmitting a corresponding accept response of the permitted earlier media transmission right type to other users in a group of the user according to the authorization result; and transmitting, by the user, corresponding media stream data of the permitted earlier media transmission right type to the other users in the group of the user;
c5. receiving, by the control point, a later media transmission right application of the user applying for the earlier media transmission right or other user applying for the later media transmission right in the group of the user, and judging that an authorization result of the later media transmission right is permitted;
d5. giving, by the control point, a corresponding permit media transmission right response of the later media transmission right type to the user applying for the earlier media transmission right or the user applying for the later media transmission right, and transmitting a corresponding accept response of a permitted later media transmission right type to the other users in the group of the user applying for the earlier media transmission right or the user applying for the later media transmission right after receiving an earlier media transmission right release request from the user applying for the earlier media transmission right, and transmitting, by the user applying for the earlier media transmission right or the user applying for the later media transmission right, corresponding media stream data of the permitted later media transmission right type to the other users in the group of the user.

22. The method according to claim 21, **characterized in that** the Step d5 further comprises transmitting, by the control point, a message indicating that the earlier media transmission right is free to the other users in the group of the user applying for the earlier media transmission right.

23. A processing method for media transmission right, **characterized by** presetting corresponding relations between media transmission right types and media transmission right attributes in a control point, the control point being used for performing a unified management on a multi-party communication, the method comprising:
a6. applying, by a user, for a media transmission right to the control point through a media transmission right application, and judging, by the control point, the earlier applied media transmission right according to media transmission right type identifications for identifying the media transmission right types carried in the media transmission right application and the corresponding media transmission right attributes of the media transmission right type identifications preset in the control point, and obtaining an authorization result;
b6. giving, by the control point, a permit media transmission right response of the media transmission right of a permitted type to the user, and transmitting a corresponding accept response of the permitted media transmission right type to other users in a group of the user according to the authorization result; and transmitting, by the user, corresponding media stream data of the permitted media transmission right type to the other users in the group of the user;
c6. receiving, by the control point, a media transmission right application of the corresponding user of the earlier applied media transmission right or other user in the group of the user, judging that a media transmission right authorization result of the later applied media transmission right is permitted, and determining that an authorization order of the later applied media transmission right is before that of the earlier applied media transmission right according to the preset media transmission right attributes;
d6. revoking, by the control point, the earlier applied media transmission right, giving a corresponding permit media transmission right response of the later applied media transmission right type to the corresponding user of the later applied media transmission right, and transmitting a corresponding accept response of the permitted later applied media transmission right type to the other users in the group of the corresponding user of the later applied media transmission right, and transmitting, by the corresponding user of the later applied media transmission right, corresponding media stream data of the permitted later applied media transmission right type to the other users in the group of the user; and
e6. giving, by the control point, a corresponding permit media transmission right response of the earlier applied media transmission right type to the corresponding user of the earlier applied media transmission right, and transmitting the corresponding accept response of the permitted earlier applied media transmission right type to the other users in the group of the corresponding user of the earlier applied media transmission right after receiving a media transmission right release request of the later applied media transmission right from the corresponding user of the later applied media transmission right, and transmitting, by the corresponding user of the earlier applied media transmission right, the corresponding media stream data of the permitted earlier applied media transmission right type to the other users in the group of the user.

24. The method according to claim 23, **characterized in that** the revoking, by the control point, the earlier applied media transmission right in the Step d6 comprises transmitting, by the control point, a message to revoke the earlier applied media transmission right to the corresponding user of the earlier applied media transmission right, and returning, by the corresponding user of the earlier applied media transmission right, a release request for the earlier applied media transmission right to the control point.

25. The method according to claim 24, **characterized in that** in the Step d6, after the control point receives the release request for the earlier applied media transmission right, the method further comprises transmitting, by the control point, a message indicating that the earlier media transmission right is free to the other users in the group of the user applying for the earlier media transmission right.

26. A processing method for media transmission right, **characterized by** presetting corresponding relations between media transmission right types and media transmission right attributes in a control point, the control point being used for performing a unified management on a multi-party communication, the method comprising:
a7. applying, by a user, for a media transmission right to the control point through a media transmission right application, and judging, by the control point, the media transmission right according to media transmission right type identifications for identifying the media transmission right types carried in the media transmission right application and the corresponding media transmission right attributes of the media transmission right type identifications preset in the control point, and obtaining an authorization result;
b7. giving, by the control point, a permit reject media transmission right response or a reject media transmission right response of a permitted or rejected media transmission right type to the user, and transmitting a corresponding accept response of the permitted media transmission right type to other users in a group of the user according to the authorization result; and
c7. transmitting, by the user, corresponding media stream data of the permitted media transmission right type to the other users in the group of the user.

27. A processing device for media transmission right, **characterized in that** the device is disposed in a multi-party communication system, comprising:
a judgment module, adapted to receive a media transmission right application carrying media transmission right types from a user, obtain a corresponding relation between the media transmission right type and a media transmission right attribute from a storage module, judge whether the received media transmission right application is authorized or not according to the corresponding relation, and transmit an authorization result obtained by the judgment to a transmission module;
the storage module, adapted to store the preset corresponding relations between the media transmission right types and the media transmission right attributes; and
the transmission module, adapted to receive the authorization result from the judgment module, and transmit media transmission right responses and media stream data respectively to the user applying for the media transmission right and other users in a group of the user.

28. The device according to claim 27, **characterized in that** the transmission module transmits a corresponding permit media transmission right response of a permitted media transmission right type in the media transmission right types to the user, and transmits a corresponding accept response of the permitted media transmission right type to the other users in the group of the user; the user transmits corresponding media stream data of the permitted media transmission right type to the other users in the group of the user; and the transmission module transmits a corresponding reject media transmission right response of a rejected media transmission right type in the media transmission right types to the user.

29. The device according to claim 27, **characterized in that** the processing device for media transmission right is disposed in a control point for performing a unified management on a multi-party communication, or is an independent entity.
